# EUROPÄISCHE PATENTANMELDUNG

(11) **EP 2 946 971 A2**
(43) Veröffentlichungstag der Anmeldung: **25.11.2015**
(21) Anmeldenummer: 15001554.3
(22) Anmeldetag: 22.05.2015
(51) Int. Cl.: B60P 1/64

(54) **LADESYSTEM FÜR EIN FAHRZEUG**

(30) Priorität: 23.05.2014 DE 102014107334
(71) Anmelder: Westrick, Ludger, 46342 Velen-Ramsdorf (DE)
(72) Erfinder: Westrick, Ludger, 46342 Velen-Ramsdorf (DE)

(57) **Zusammenfassung**

Die Erfindung betrifft ein Ladesystem (3) für ein Fahrzeug (1), insbesondere Last-fahrzeug, mit dem ein Aufbau (2) zwischen einer auf das Fahrzeug (1) aufgeladenen Transportstellung und einer von dem Fahrzeug (1) abgeladenen Verladestellung derart hin und her bewegbar ist, dass ein Ladeboden (4) des Aufbaus (2) während seines Auftadens auf das Fahrzeug (1) und während seines Abladens von dem Fahrzeug (1) im Wesentlichen horizontal ausgerichtet ist, aufweisend - wenigstens eine an dem Fahrzeug (1) anordbare Bewegungseinrichtung (5), welche eingerichtet ist, geführte Relativbewegungen zwischen dem Fahrzeug (1) und dem Aufbau (2) in Längsrichtung des Fahrzeugs (1) derart zu ermöglichen, dass der Aufbau (2) relativ zu dem Fahrzeug (1) eine bezüglich der Fahrtrichtung des Fahrzeugs (1) rückwärtige Hubstellung einnehmen kann, in welcher der Aufbau (2) heckseitig über das Fahrzeug (1) vorsteht, wobei die Bewegungseinrichtung (5) derart an dem Fahrzeug (1) anordbar ist, dass sich der Aufbau (2) während der geführten Relativbewegungen zumindest teilweise über die Bewegungseinrichtung auf dem Fahrzeug (1) abstützt,
- wenigstens eine an einem Heckbereich des Fahrzeugs (1) oder an einem bezüglich der Fahrtrichtung des Fahrzeugs (1) vorwärtigen Endbereich des Aufbaus (2) anordbare erste Hubeinrichtung (7) und wenigstens eine an einem bezüglich der Fahrtrichtung des Fahrzeugs (1) rückwärtigen Bereich des Aufbaus (2) anordbare zweite Hubeinrichtung (8), wobei der Aufbau (2) mittels der ersten Hubeinrichtung (7) und der zweiten Hubeinrichtung (8) in vertikaler Richtung zwischen der Hubstellung und der Verladestellung hin und her bewegbar ist.

## Beschreibung

Die Erfindung betrifft ein Ladesystem für ein Fahrzeug, mit dem ein Aufbau zwi-schen einer auf das Fahrzeug aufgeladenen Transportstellung und einer von dem Fahrzeug abgeladenen Verladestellung derart hin und her bewegbar ist, dass ein Ladeboden des Aufbaus während seines Aufladens auf das Fahrzeug und während seines Abladens von dem Fahrzeug im Wesentlichen horizontal ausgerichtet ist.

Des Weiteren betrifft die Erfindung ein Fahrzeug, insbesondere Lastfahrzeug, mit wenigstens einem Aufbau.

Ferner betrifft die Erfindung ein Verfahren zum Aufladen und Abladen eines Auf-baus eines Fahrzeugs auf das Fahrzeug bzw. von dem Fahrzeug, wobei ein Ladeboden des Aufbaus während seines Aufladens auf das Fahrzeug und während seines Abladens von dem Fahrzeug in einer im Wesentlichen horizontalen Ausrichtung gehalten wird.

### Stand der Technik

Aus DE 28 44 044 A1 ist ein Lastkraftwagen bekannt, welcher eine Verladeeinrichtung aufweist, welche entlang einer in Fahrzeuglängsrichtung verlaufenden Bahn bewegbar an einem Fahrgestell des abgestützten Lastkraftwagens angeordnet ist. Die Verladeeinrichtung umfasst ein senkrechtes Gerüst, an dem eine Hubeinrichtung vertikal verschiebbar angeordnet ist. Mittels der Verladeeinrichtung kann ein Container auf den Lastkraftwagen aufgeladen und von dem Lastkraftwagen abgeladen werden.

### Offenbarung der Erfindung

Aufgabe der Erfindung ist es, ein Aufladen und ein Abladen eines Aufbaus auf bzw. von einem Fahrzeug unkompliziert und schnell zu ermöglichen, ohne die Nutzlast eines eines Fahrzeugs stark einzuschränken.

Diese Aufgabe wird durch ein Ladesystem gemäß Anspruch 1, ein Fahrzeug gemäß Anspruch 9 und ein Verfahren gemäß Anspruch 10 gelöst. Vorteilhafte Ausgestaltungen sind in den abhängigen Ansprüchen wiedergegeben, welche jeweils für sich genommen oder in verschiedener Kombination miteinander einen Aspekt der Erfindung darstellen können.

Mit Anspruch 1 wird ein Ladesystem für ein Fahrzeug, insbesondere Lastfahrzeug, vorgeschlagen, mit dem ein Aufbau zwischen einer auf das Fahrzeug aufgeladenen Transportstellung und einer von dem Fahrzeug abgeladenen Verladestellung derart hin und her bewegbar ist, dass ein Ladeboden des Aufbaus während seines Aufladens auf das Fahrzeug und während seines Abladens von dem Fahrzeug im Wesentlichen horizontal ausgerichtet ist, aufweisend
- wenigstens eine an dem Fahrzeug anordbare Bewegungseinrichtung, welche eingerichtet ist, geführte Relativbewegungen zwischen dem Fahrzeug und dem Aufbau in Längsrichtung des Fahrzeugs derart zu ermöglichen, dass der Aufbau relativ zu dem Fahrzeug eine bezüglich der Fahrtrichtung des Fahrzeugs rückwärtige Hubstellung einnehmen kann, in welcher der Aufbau heckseitig über das Fahrzeugs vorsteht, wobei die Bewegungseinrichtung derart an dem Fahrzeug anordbar ist, dass sich der Aufbau während der geführten Relativbewegungen zumindest teilweise auf dem Fahrzeug abstützt,
- wenigstens eine an einem Heckbereich des Fahrzeugs oder an einem bezüglich der Fahrtrichtung des Fahrzeugs vorwärtigen Endbereich des Aufbaus anordbare erste Hubeinrichtung und wenigstens eine an einem bezüglich der Fahrtrichtung des Fahrzeugs rückwärtigen Bereich des Aufbaus anordbare zweite Hubeinrichtung, wobei der Aufbau mittels der ersten Hubeinrichtung und der zweiten Hubeinrichtung in vertikaler Richtung zwischen der Hubstellung und der Verladestellung hin und her bewegbar ist.

Erfindungsgemäß kann der Aufbau mittels der ersten Hubeinrichtung und der zweiten Hubeinrichtung in vertikaler Richtung zwischen der Hubstellung und der Verladestellung hin und her bewegt werden, so dass der Kraftaufwand zum Anheben und Absenken des Aufbaus im Vergleich zu der Offenbarung von DE 28 44 044 A1 deutlich reduziert ist, bei der keine entsprechende zweite Hubeinrichtung vorhanden ist. Bei dem erfindungsgemäßen Hubsystem werden die Kräfte beim Absenken und Anheben des Aufbaus auf die erste Hubeinrichtung und die zweite Hubeinrichtung verteilt, so dass insbesondere die erste Hubeinrichtung konstruktiv deutlich weniger materialaufwändig und weniger konstruktionsaufwändig ausgestaltet werden kann, als die Verladeeinrichtung gemäß DE 28 44 044 A1.

Der Aufbau kann wie ein herkömmlicher, fest montierter Aufbau be- und entladen werden. Der Aufbau kann im Rahmen der Erfindung seine Verladestellung beispielsweise dadurch einnehmen, dass der Ladeboden bis auf die Höhe einer Laderampe oder bis auf den Boden abgesenkt wird. Alternativ kann der Aufbau auf eine Stützkonstruktion aufgestellt werden, um seine Verladestellung einzunehmen.

Dass der Ladeboden des Aufbaus während seines Aufladens auf das Fahrzeug und während seines Abladens von dem Fahrzeug im Wesentlichen horizontal ausgerichtet ist, bedeutet im Rahmen der Erfindung, dass der Ladeboden währen seines Aufladens und Abladens derart ausgerichtet werden kann, dass beispielsweise eine auf dem Ladeboden befindliche Ladung nicht gegen ein Verrutschen auf dem Ladeboden wegen einer Schrägstellung des Ladebodens gesichert werden muss. Dies bedeutet nicht, dass der Ladeboden bei seinem Aufladen und Abladen nicht geringfügig geneigt sein kann. Vorzugsweise ist der Ladeboden bei seinem Aufladen und Abladen weniger als 20°, bevorzugt weniger als 10°, geneigt.

Die mittels der an dem Fahrzeug anordbaren Bewegungseinrichtung durchführbaren geführte Relativbewegungen zwischen dem Fahrzeug und dem Aufbau in Längsrichtung des Fahrzeugs derart, dass der Aufbau relativ zu dem Fahrzeug eine bezüglich der Fahrtrichtung des Fahrzeugs rückwärtige Hubstellung einnehmen kann, in weicher der Aufbau heckseitig über das Fahrzeugs vorsteht, können unter Verwendung von an dem Aufbau und/oder dem Fahrzeug anordbaren Führungsmitteln erfolgen. Als Führungsmittel können beispielsweise in Längsrichtung des Fahrzeugs ausgerichtete Führungsschienen sowie mit den Führungsschienen zusammenwirkende Gleit- oder Rollkörper dienen. Eine geführte Relativbewegung kann dadurch erfolgen, dass das Fahrzeug still steht und der Aufbau relativ zu dem Fahrzeug bewegt wird, dass der Aufbau ortsfest gehalten wird, während das Fahrzeug relativ zu dem Aufbau in Fahrtrichtung bewegt wird, oder dass eine Kombination dieser Bewegungen erfolgt.

Da die Bewegungseinrichtung derart an dem Fahrzeug anordbar ist, dass sich der Aufbau während der geführten Relativbewegungen zumindest teilweise auf dem Fahrzeug abstützt, wird ein Teil des Aufbaus während der geführten Relativbewegungen von dem Fahrzeug getragen. Die zweite Hubeinrichtung wird spätestens aktiviert, wenn der Schwerpunkt des Aufbaus bei einer geführten Relativbewegung das Fahrzeug heckseitig verlässt.

Die erste Hubeinrichtung kann an einem Heckbereich des Fahrzeugs oder an einem bezüglich der Fahrtrichtung des Fahrzeugs vorwärtigen Endbereich des Aufbaus angeordnet sein. In letzterem Fall wird die erste Hubeinrichtung bei einer geführten Relativbewegung zwischen Aufbau und Fahrzeug, bei der das Fahrzeug ortsfest gehalten wird, mit dem Aufbau mitbewegt. Das Ladesystem kann auch zwei oder mehrere erste Hubeinrichtungen aufweisen.

Der bezüglich der Fahrtrichtung des Fahrzeugs rückwärtigen Bereich des Aufbaus, an dem die zweite Hubeinrichtung angeordnet werden kann, erstreckt sich vorzugsweise vom rückwärtigen Ende des Aufbaus bis fast zur Mitte des Aufbaus. Die zweite Hubeinrichtung ist insbesondere in einem unteren Bereich des Aufbaus, insbesondere unter dem Aufbau, anordbar. Das Ladesystem kann auch zwei oder mehrere zweite Hubeinrichtungen aufweisen.

Die erste Hubeinrichtung und die zweite Hubeinrichtung können zumindest in ihrer Wirkung miteinander verbunden sein. Beispielsweise können die erste Hubeinrichtung und die zweite Hubeinrichtung wenigstens einen gemeinsamen Aktor oder einen manuellen Antrieb aufweisen. Das Ladesystem kann hierzu wenigstens eine Einrichtung aufweisen, mittels der die Bewegungseinrichtung, die erste Hubeinrichtung und/oder die zweite Hubeinrichtung zumindest teilweise körperlich und/oder zumindest in ihren Wirkungen miteinander koppelbar sind. Das Ladesystem kann auch mehr als zwei miteinander gekoppelte oder ungekoppelte Hubeinrichtungen aufweisen.

Das Ladesystem kann einen oder mehrere Sensoren zum Erfassen von Relativstellungen des Aufbaus relativ zum Fahrzeug umfassen, über welche mittels des Ladesystems ausführbare Bewegungen, insbesondere Hubbewegungen, des Aufbaus relativ zu dem Fahrzeug automatisierbar sind. Die Hubeinrichtungen und/oder die Bewegungseinrichtung können zumindest teilweise manuell betätigbar sein.

Gemäß einer vorteilhaften Ausgestaltung weist die Bewegungseinrichtung wenigstens einen ansteuerbaren Aktor auf, welcher einerseits an dem Fahrzeug und andererseits an dem Aufbau angreift. Der Aktor kann beispielsweise mechanisch, elektromechanisch, hydraulisch oder pneumatisch ausgebildet sein. Der Aktor kann über wenigstens ein Zugmittel, beispielsweise ein Zugseil oder dergleichen, oder ein Schubmittel, beispielsweise eine Schubstange oder dergleichen, an dem Aufbau und/oder dem Fahrzeug angreifen. Die Bewegungseinrichtung kann auch zwei oder mehrere Aktoren aufweisen.

Gemäß einer weiteren vorteilhaften Ausgestaltung weist die erste Hubeinrichtung wenigstens einen ansteuerbaren Aktor auf, welcher einerseits an dem Fahrzeug und andererseits an dem Aufbau angreift. Der Aktor kann beispielsweise mechanisch, elektromechanisch, hydraulisch oder pneumatisch ausgebildet sein. Die erste Hubeinrichtung kann auch zwei oder mehrere Aktoren aufweisen.

Gemäß einer weiteren vorteilhaften Ausgestaltung weist die zweite Hubeinrichtung wenigstens einen ansteuerbaren Aktor und wenigstens ein Stützglied auf, wobei das Stützglied mittels des Aktors relativ zu dem Aufbau zwischen einer Ruhestellung und einer Stützstellung hin und her bewegbar ist. Der Aktor kann beispielsweise mechanisch, elektromechanisch, hydraulisch oder pneumatisch ausgebildet sein. Die zweite Hubeinrichtung kann auch zwei oder mehrere Aktoren und/oder Stützglieder aufweisen. Der Aufbau kann sich in seinem rückwärtigen Bereich über wenigstens ein Stützglied auf einem Boden oder dergleichen abstützen.

Die Aktoren von erster Hubeinrichtung und zweiter Hubeinrichtung können einzeln oder zumindest teilweise gemeinsam ansteuerbar sein.

Gemäß einer weiteren vorteilhaften Ausgestaltung ist das Stützglied ein Teil einer Teleskopstütze oder als Gelenkstütze ausgebildet. Eine solche Teleskopstütze kann beispielsweise durch einen Hydraulikzylinder oder einen Pneumatikzylinder ausgebildet sein oder eine Spindel oder eine Zahnstange umfassen. Eine Gelenkstütze umfasst wenigstens zwei gelenkig miteinander verbundene Stützteile.

Gemäß einer weiteren vorteilhaften Ausgestaltung ist an einem bodenseitigen Ende des Stützglieds wenigstens ein Standfuß, wenigstens eine Rolle oder wenigstens eine Gleitfläche angeordnet Ein Standfuß ist dann von Vorteil, wenn der Aufbau während einer geführten Relativbewegung zwischen dem Aufbau und dem Fahrzeug ortsfest gehalten wird, während sich das Fahrzeug bewegt. Eine Rolle ist dann von Vorteil, wenn das Fahrzeug während einer geführten Relativbewegung zwischen dem Aufbau und dem Fahrzeug ortsfest gehalten wird, während sich der Aufbau bewegt. Zudem kann mittels einer Rolle möglich sein, dass sich das Fahrzeug gemeinsam mit dem in seiner Hubstellung, seiner Verladestellung oder einer dazwischen liegenden Stellung befindlichen Aufbau bewegt, beispielsweise um an eine Laderampe oder dergleichen anzufahren. Eine an dem bodenseitigen Ende des Stützglieds angeordnete Gleitfläche kann entsprechend einer Rolle wirken. An dem Ende des Stützglieds können auch zwei oder mehrere Standfüße, Rollen oder Gleitflächen angeordnet sein.

Gemäß einer weiteren vorteilhaften Ausgestaltung weist das Ladesystem wenigstens eine Steuereinrichtung auf, mittels welcher der Aktor der Bewegungseinrichtung, der Aktor der ersten Hubeinrichtung und/oder der Aktor der zweiten Hubeinrichtung ansteuerbar ist. Die Steuereinrichtung ist elektronisch ausgebildet und kommunikationstechnisch mit wenigstens einem der Aktoren verbunden. Es kann an dem Fahrzeug eine mit der Steuereinrichtung zusammenwirkende Bedieneinheit angeordnet sein, welche manuell betätigbar ist, um den wenigstens einen Aktor anzusteuern.

Gemäß einer weiteren vorteilhaften Ausgestaltung umfasst das Ladesystem wenigstens eine Arretiereinrichtung, mittels der die Transportstellung des Aufbaus sicherbar ist. Die Arretiereinrichtung kann beispielsweise manuell betätigbar, mechanisch, elektromechanisch, hydraulisch oder pneumatisch ausgebildet sein. Die Arretiereinrichtung kann kommunikationstechnisch mit der Steuereinrichtung verbunden und über diese und die Bedieneinheit ansteuerbar sein. Die Arretiereinrichtung kann wirktechnisch mit der Bewegungs- und/oder mit den Hubeinrichtungen verbunden sein oder unabhängig davon wirken.

Mit Anspruch 9 wird ein Fahrzeug, insbesondere Lastfahrzeug, mit wenigstens einem Aufbau vorgeschlagen, gekennzeichnet durch wenigstens ein Ladesystem nach einer der vorgenannten Ausgestaltungen oder einer beliebigen Kombination derselben. Mit diesem Fahrzeug sind die oben mit Bezug auf das Ladesystem genannten Vorteile entsprechend verbunden. Der Aufbau kann als Plattform, geschlossen, zumindest teilweise offen oder zur Aufnahme von Wechselbehältern bzw. kleineren Aufbauten ausgebildet sein. Der Aufbau kann wenigstens eine Überfahrmöglichkeit aufweisen, die beispielsweise als eine Bordwand ausgebildet sein kann, die gleichzeitig als Rampe fungieren kann. Das Fahrzeug kann ein Lastkraftwagen oder ein Anhänger sein. Das Fahrzeug kann im hinteren Bereich wenigstens eine Abstützung zum Abstützen des Fahrzeugs auf dem Boden aufweisen. Der Aufbau kann von dem Fahrzeug abkoppelbar sein. An dem Aufbau, dem Fahrzeug und/oder dem Ladesystem können Anbauteile, wie beispielsweise ein Unterfahrschutz, Leuchtenträger oder dergleichen, beweglich oder abnehmbar angeordnet sein.

Mit Anspruch 10 wird ein Verfahren zum Aufladen und Abladen eines Aufbaus eines Fahrzeugs, insbesondere Lastfahrzeugs, auf das Fahrzeug bzw. von dem Fahrzeug vorgeschlagen, wobei ein Ladeboden des Aufbaus während seines Aufladens auf das Fahrzeug und während seines Abladens von dem Fahrzeug in einer im Wesentlichen horizontalen Ausrichtung gehalten wird, wobei das Aufladen des Aufbaus auf das Fahrzeugs durch eine kinematische Umkehrung des Abladens des Aufbaus von dem Fahrzeug erreicht wird, wobei das Abladen des Aufbaus von dem Fahrzeug die Schritte umfasst:
- Ausführen einer geführten Relativbewegung zwischen dem Fahrzeug und dem Aufbau in Längsrichtung des Fahrzeugs, wodurch der Aufbau von einer auf das Fahrzeug aufgeladenen Transportstellung relativ zu dem Fahrzeug in eine bezüglich der Fahrtrichtung des Fahrzeugs rückwärtige Hubstellung überführt wird, in welcher der Aufbau heckseitig Ober das Fahrzeugs vorsteht, wobei der Aufbau während der geführten Relativbewegung zumindest teilweise durch das Fahrzeug abgestützt wird;
- Absenken des Aufbaus in vertikaler Richtung von der Hubstellung in eine von dem Fahrzeug abgeladene Verladestellung, wobei das Absenken des Aufbaus unter Verwendung von wenigstens einer an einem Heckbereich des Fahrzeugs oder an einem bezüglich der Fahrtrichtung des Fahrzeugs vorwärtigen Endbereich des Aufbaus anordbaren ersten Hubeinrichtung und wenigstens einer an einem bezüglich der Fahrtrichtung des Fahrzeugs rückwärtigen Bereich des Aufbaus anordbaren zweiten Hubeinrichtung erfolgt.

Vorteilhafterweise ist beispielsweise zum Absetzen des Aufbaus die zweite Hubeinrichtung zunächst vor oder während des Bewegungsvorgangs absenkbar, um dann nach Beendigung des Bewegungsvorgangs gemeinsam abhängig oder unabhängig von der ersten Hubeinrichtung den Hubvorgang durchzuführen.

Mit diesem Verfahren sind die oben mit Bezug auf das Ladesystem genannten Vorteile entsprechend verbunden.

Im Folgenden wird die Erfindung unter Bezugnahme auf die anliegenden Figuren anhand von Ausführungsbeispielen beispielhaft erläutert, wobei die nachfolgend dargestellten Merkmale sowohl jeweils für sich genommen als auch in Kombination miteinander einen Aspekt der Erfindung darstellen können. Es zeigen
- Figur 1;: eine schematische Seitenansicht eines Ausführungsbeispiels für ein erfindungsgemäßes Fahrzeug mit in seiner Transportstellung befindlichem Aufbau,
- Figur 2:: eine schematische Seitenansicht des in Figur 1 gezeigten Fahrzeugs in einem Ladezustand,
- Figur 3:: eine schematische Seitenansicht des in Figur 1 gezeigten Fahrzeugs mit in seiner Hubstellung befindlichem Aufbau,
- Figur 4:: eine schematische Seitenansicht des in Figur 1 gezeigten Fahrzeugs mit in seiner Verladestellung befindlichem Aufbau,
- Figur 5:: eine schematische Seitenansicht eines weiteren Ausführungsbeispiels für ein erfindungsgemäßes Fahrzeug und
- Figur 6:: eine schematische Seitenansicht eines weiteren Ausführungsbeispiels für ein erfindungsgemäßes Fahrzeug mit in seiner Hubstellung befindlichem Aufbau.

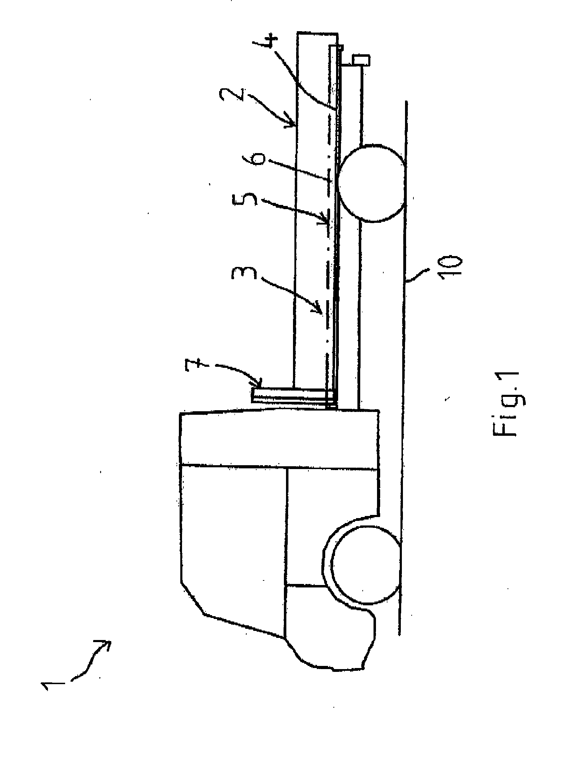

Figur 1 zeigt eine schematische Seitenansicht eines Ausführungsbeispiels für ein auf einem Boden 10 stehendes erfindungsgemäßes Fahrzeug 1 in Form eines Lastkraftwagens mit in seiner Transportstellung befindlichem Aufbau 2 in Form eines offenen Aufbaus.

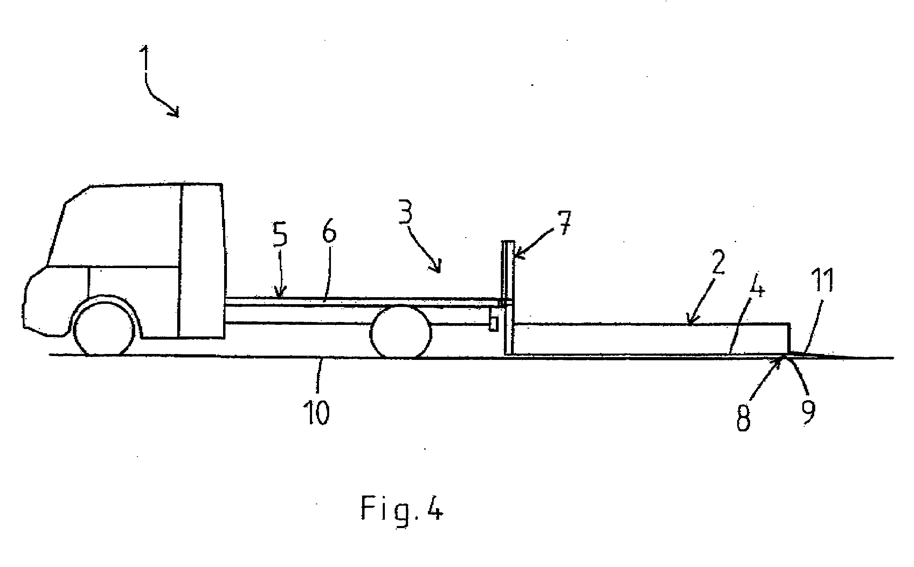

Das Fahrzeug umfasst ein Ladesystem 3, mit dem der Aufbau 2 zwischen der gezeigten auf das Fahrzeug aufgeladenen Transportstellung und einer in Figur 4 gezeigten von dem Fahrzeug abgeladenen Verladestellung derart hin und her bewegbar ist, dass ein Ladeboden 4 des Aufbaus 2 während seines Aufladens auf das Fahrzeug 1 und während seines Abladens von dem Fahrzeug 1 im Wesentlichen horizontal ausgerichtet ist.

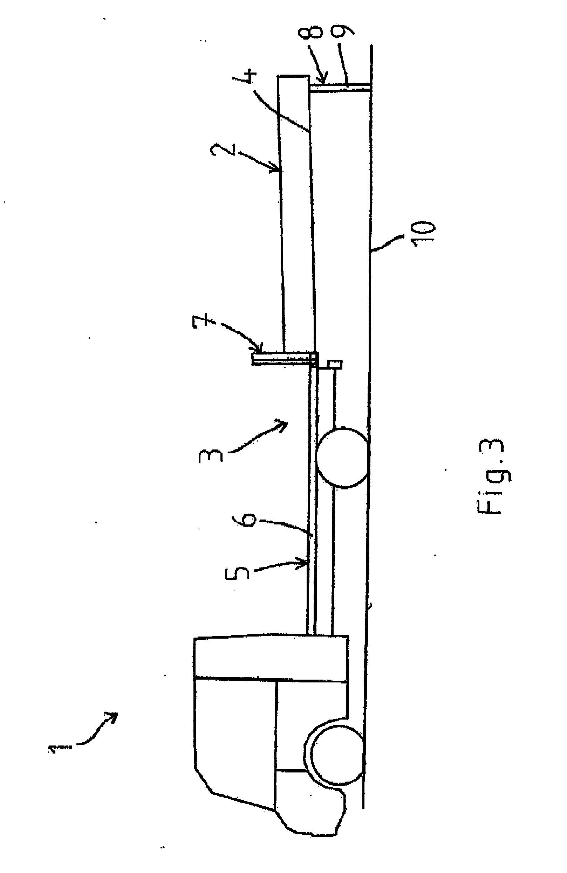

Das Ladesystem 3 umfasst eine an dem Fahrzeug 1 angeordnete Bewegungseinrichtung 5, welche eingerichtet ist, geführte Relativbewegungen zwischen dem Fahrzeug 1 und dem Aufbau 2 in Längsrichtung des Fahrzeugs 1 derart zu ermöglichen, dass der Aufbau 2 relativ zu dem Fahrzeug 1 eine bezüglich der Fahrtrichtung des Fahrzeugs 1 rückwärtige Hubstellung einnehmen kann, in welcher der Aufbau 2 heckseitig über das Fahrzeugs 1 vorsteht, wie es in Figur 3 beispielhaft gezeigt ist. Die Bewegungseinrichtung 5 ist derart an dem Fahrzeug 1 angeordnet, dass sich der Aufbau 2 während der geführten Relativbewegungen zumindest teilweise über die Bewegungseinrichtung 5 auf dem Fahrzeug 1 abstützt. Von der Bewegungseinrichtung 5 ist in den Figuren lediglich eine Längsschiene 6 zu sehen, welche mit nicht gezeigten Gleit- oder Rollmitteln und Führungen der Bewegungseinrichtung 5 zusammenwirkt Die Bewegungseinrichtung 3 kann wenigstens einen nicht dargestellten ansteuerbaren Aktor aufweisen, welcher einerseits an dem Fahrzeug 1 und andererseits an dem Aufbau 2 angreift.

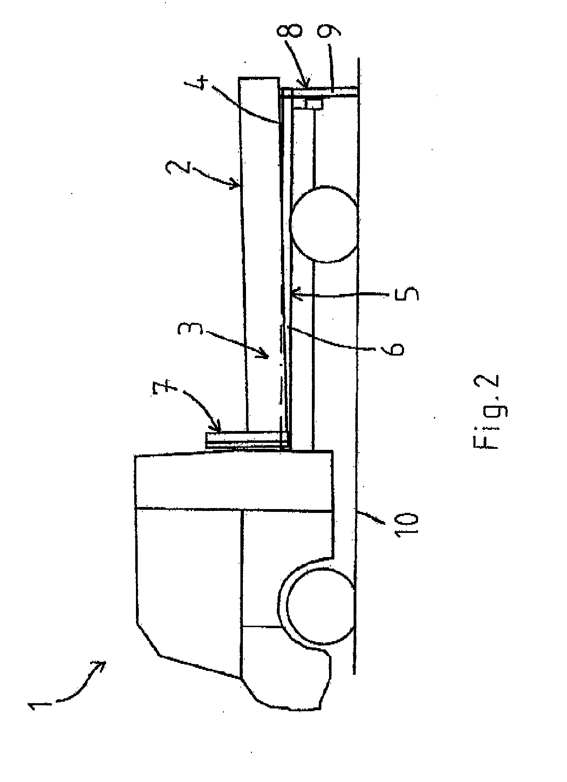

Das Ladesystem 3 umfasst des Weiteren eine an einem bezüglich der Fahrtrichtung des Fahrzeugs 1 vorwärtigen Endbereich des Aufbaus 2 angeordnete erste Hubeinrichtung 7 und eine in den Figuren 2 bis 4 gezeigte, an einem bezüglich der Fahrtrichtung des Fahrzeugs 1 rückwärtigen Bereich des Aufbaus 2 angeordnete zweite Hubeinrichtung 8, wobei der Aufbau 2 mittels der ersten Hubeinrichtung 7 und der zweiten Hubeinrichtung 8 in vertikaler Richtung zwischen der Hubstellung und der Verladestellung hin und her bewegbar ist. Die erste Hubeinrichtung 7 weist wenigstens einen nicht dargestellten ansteuerbaren Aktor auf, welcher einerseits an dem Fahrzeug 1 und andererseits an dem Aufbau 2 angreift. Die zweite Hubeinrichtung 8 weist wenigstens einen nicht dargestellten ansteuerbaren Aktor und wenigstens ein in den Figuren 3 bis 4 gezeigten Stützglied 9 auf, wobei das Stützglied 9 mittels des Aktors relativ zu dem Aufbau 2 zwischen einer Ruhestellung und einer Stützstellung hin und her bewegbar ist.

Das Ladesystem 3 umfasst wenigstens eine nicht gezeigte Arretiereinrichtung, mittels der die Transportstellung des Aufbaus 2 sicherbar ist. Des Weiteren umfasst das Ladesystem 3 wenigstens eine nicht dargestellte Steuereinrichtung, mittels welcher der Aktor der Bewegungseinrichtung 3, der Aktor der ersten Hubeinrichtung 7 und/oder der Aktor der zweiten Hubeinrichtung 8 ansteuerbar ist.

Figur 2 zeigt eine schematische Seitenansicht des in Figur 1 gezeigten Fahr zeugs 1 in einem Ladezustand. Zur Herstellung dieses Ladezustands ist die zweite Hubeinrichtung 8 betätigt worden, wodurch das Stützglied 9 von seiner Ruhestellung in die gezeigte Stützstellung überführt worden ist. Der Aufbau 2 stützt sich über das Stützglied 9 derart gegenüber dem Boden 10 ab, dass der Aufbau 2 in seinem rückwärtigen Bereich zum wenigstens teilweisen Lösen der Arretiereinrichtung angehoben wird. Das Stützglied 9 kann ein Teil einer Teleskopstütze oder als Gelenkstütze ausgebildet sein. An einem bodenseitigen Ende des Stützglieds 9 ist ein nicht dargestellter Standfuß angeordnet.

Figur 3 zeigt eine schematische Seitenansicht des in Figur 1 gezeigten Fahrzeugs 1 mit in seiner Hubstellung befindlichem Aufbau 2. Der Aufbau 2 ist dadurch von seiner in Figur 2 gezeigten Stellung in die Hubstellung überführt worden, indem das Fahrzeug 1 bei ortsfestgehaltenem Aufbau 2 in Fahrtrichtung bewegt worden ist. Die erste Hubeinrichtung 7 ist gemeinsam mit dem Aufbau 2 verlagert worden.

Figur 4 zeigt eine schematische Seitenansicht des in Figur 1 gezeigten Fahrzeugs 1 mit in seiner Verladestellung befindlichem Aufbau 2. Der Aufbau 2 wurde über eine Betätigung der ersten Hubeinrichtung 7 und der zweiten Hubeinrichtung 8 von seiner in Figur 3 gezeigten Hubstellung in die Verladestellung bewegt. Im rückwärtigen Bereich des Aufbaus 2 ist wenigstens eine Ladeschiene 11 angeordnet, über die der Aufbau 2 beladen werden kann,

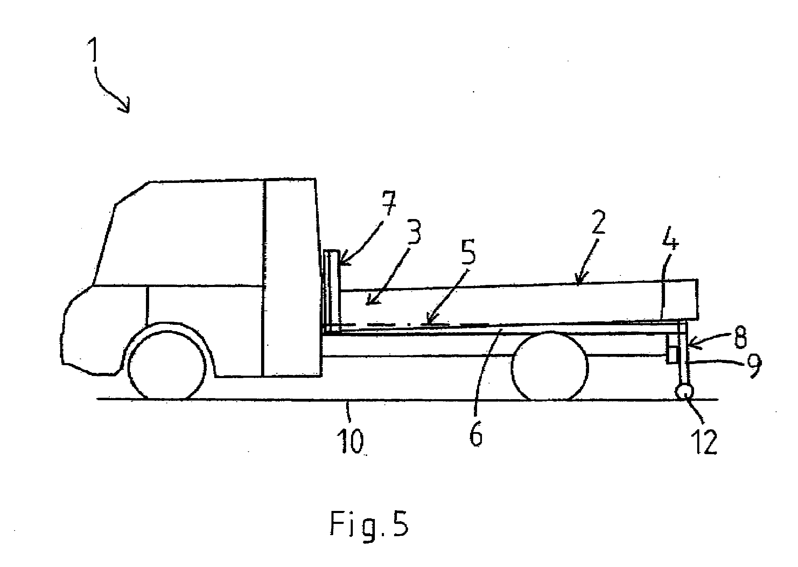

Figur 5 zeigt eine schematiche Seitenansicht eines weiteren Ausführungsbeispiels für ein erfindungsgemäßes Fahrzeug 1 entsprechend dem in Figur 2 gezeigten Ladezustand. Im Unterschied zu dem in den Figuren 1 bis 4 gezeigten Ausführungsbeispiel ist an dem bodenseitigen Ende des Stützglieds 9 eine Rolle 12 angeordnet.

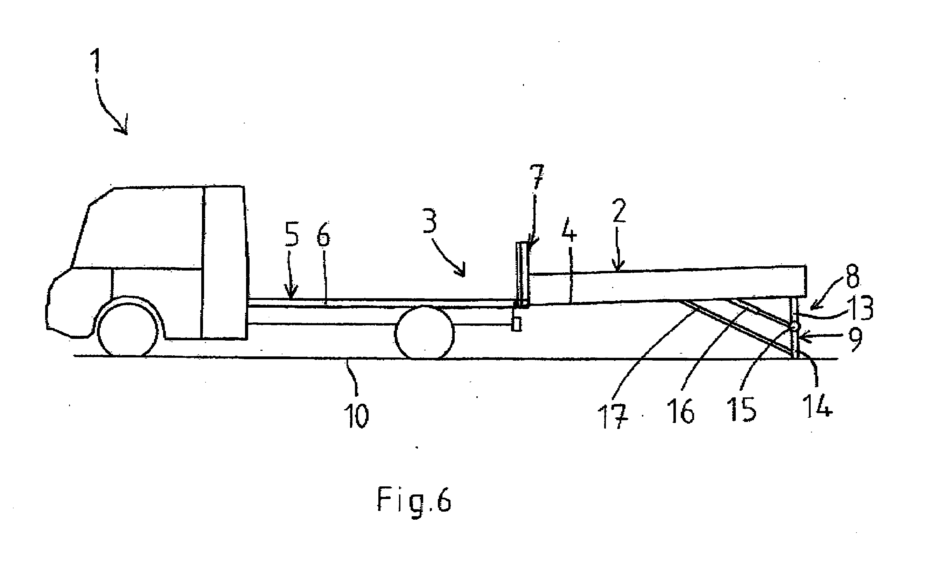

Figur 6 zeigt eine schematische Seitenansicht eines weiteren Ausführungsbeispiels für ein erfindungsgemäßes Fahrzeug 1 mit in seiner Hubstellung befindlichem Aufbau 2 entsprechend Figur 3. Im Unterschied zu den in den Figuren 1 bis 5 gezeigten Ausführungsbeispielen bildet das Stützglied 9 eine zweiteilige Gelenkstütze aus, wobei zwei Stützteile 13 und 14 über ein Gelenk 15 beweglich miteinander verbunden sind. Das obere Ende des Stützteils 13 ist gelenkig mit dem Ladeboden 4 verbunden. In Figur 6 ist des Weiteren der als Hydraulikzylinder ausgebildete Aktor 16 der zweiten Hubeinrichtung 8 zu sehen, welcher einerseits im Bereich des Gelenks 15 an dem Stützglied 9 und andererseits an dem Ladeboden 4 angreift. Des Weiteren ist eine Führungsstrebe 17 der zweiten Hubeinrichtung 8 gezeigt, welche einerseits an dem bodenseitigen Stützteil 14 und andererseits an dem Ladeboden 4 angreift. Die Führungsstrebe 17 bewirkt, dass bei einer Betätigung des Aktors 16 das bodenseitige Stützteil 14 nur geringfügig in horizontaler Richtung bewegt wird, was insbesondere bei einem Stützglied 9 mit Standfuß von Vorteil ist.

### Bezugszeichenliste:

- 1: Fahrzeug
- 2: Aufbau
- 3: Ladesystem
- 4: Ladeboden
- 5: Bewegungseinrichtung
- 6: Längsschiene
- 7: erste Hubeinrichtung
- 8: zweite Hubeinrichtung
- 9: Stützglied
- 10: Boden
- 11: Ladeschiene
- 12: Rolle
- 13: Stützteil
- 14: Stützteil
- 15: Gelenk
- 16: Aktor
- 17: Führungsstrebe

## Patentansprüche

1. Ladesystem (3) für ein Fahrzeug (1), insbesondere Lastfahrzeug, mit dem ein Aufbau (2) zwischen einer auf das Fahrzeug (1) aufgeladenen Transportstellung und einer von dem Fahrzeug (1) abgeladenen Verladestellung derart hin und her bewegbar ist, dass ein Ladeboden (4) des Aufbaus (2) während seines Aufladens auf das Fahrzeug (1) und während seines Abladens von dem Fahrzeug (1) im Wesentlichen horizontal ausgerichtet ist, aufweisend
- wenigstens eine an dem Fahrzeug (1) anordbare Bewegungseinrichtung (5), welche eingerichtet ist, geführte Relativbewegungen zwischen dem Fahrzeug (1) und dem Aufbau (2) in Längsrichtung des Fahrzeugs (1) derart zu ermöglichen, dass der Aufbau (2) relativ zu dem Fahrzeug (1) eine bezüglich der Fahrtrichtung des Fahrzeugs (1) rückwärtige Hubstellung einnehmen kann, in welcher der Aufbau (2) heckseitig über das Fahrzeug (1) vorsteht, wobei die Bewegungseinrichtung (5) derart an dem Fahrzeug (1) anordbar ist, dass sich der Aufbau (2) während der geführten Relativbewegungen zumindest teilweise über die Bewegungseinrichtung auf dem Fahrzeug (1) abstützt,
- wenigstens eine an einem Heckbereich des Fahrzeugs (1) oder an einem bezüglich der Fahrtrichtung des Fahrzeugs (1) vorwärtigen Endbereich des Aufbaus (2) anordbare erste Hubeinrichtung (7) und wenigstens eine an einem bezüglich der Fahrtrichtung des Fahrzeugs (1) rückwärtigen Bereich des Aufbaus (2) anordbare zweite Hubeinrichtung (8), wobei der Aufbau (2) mittels der ersten Hubeinrichtung (7) und der zweiten Hubeinrichtung (8) in vertikaler Richtung zwischen der Hubstellung und der Verladestellung hin und her bewegbar ist.

2. Ladesystem (3) nach Anspruch 1, **dadurch gekennzeichnet, dass** die Bewegungseinrichtung (5) wenigstens einen ansteuerbaren Aktor aufweist, weicher einerseits an dem Fahrzeug (1) und andererseits an dem Aufbau (2) angreift.

3. Ladesystem (3) nach Anspruch 1 oder 2, **dadurch gekennzeichnet, dass** die erste Hubeinrichtung (7) wenigstens einen ansteuerbaren Aktor aufweist, welcher einerseits an dem Fahrzeug (1) und andererseits an dem Aufbau (2) angreift.

4. Ladesystem (3) nach einem der Ansprüche 1 bis 4, **dadurch gekennzeichnet, dass** die zweite Hubeinrichtung (8) wenigstens einen ansteuerbaren Aktor (16) und wenigstens ein Stützglied (9) aufweist, wobei das Stützglied (9) mittels des Aktors (16) relativ zu dem Aufbau (2) zwischen einer Ruhestellung und einer Stützstellung hin und her bewegbar ist.

5. Ladesystem (3) nach Anspruch 5, **dadurch gekennzeichnet, dass** das Stützglied (9) ein Teil einer Teleskopstütze oder als Gelenkstütze ausgebildet ist

6. Ladesystem (3) nach Anspruch 5 oder 6, **dadurch gekennzeichnet, dass** an einem bodenseitigen Ende des Stützglieds (9) wenigstens ein Standfuß oder wenigstens eine Rolle (12) angeordnet ist.

7. Ladesystem (3) nach einem der Ansprüche 2 bis 7, **gekennzeichnet durch** wenigstens eine Steuereinrichtung, mittels welcher der Aktor der Bewegungseinrichtung, der Aktor der ersten Hubeinrichtung und/oder der Aktor (16) der zweiten Hubeinrichtung ansteuerbar ist.

8. Ladesystem (3) nach einem der Ansprüche 1 bis 8, **gekennzeichnet durch** wenigstens eine Arretiereinrichtung, mittels der die Transportstellung des Aufbaus (2) sicherbar ist.

9. Fahrzeug (1), insbesondere Lastfahrzeug, mit wenigstens einem Aufbau (2), **gekennzeichnet durch** wenigstens ein Ladesystem (3) nach einem der Ansprüche 1 bis 9.

10. Verfahren zum Aufladen und Abladen eines Aufbaus (2) eines Fahrzeugs (1), Insbesondere Lastfahrzeugs, auf das Fahrzeug (1) bzw. von dem Fahrzeug (1), wobei ein Ladeboden (4) des Aufbaus (2) während seines Aufladens auf das Fahrzeug (1) und während seines Abladens von dem Fahrzeug (1) in einer im Wesentlichen horizontalen Ausrichtung gehalten wird, wobei das Aufladen des Aufbaus (2) auf das Fahrzeugs (1) durch eine kinematische Umkehrung des Abladens des Aufbaus (2) von dem Fahrzeug (1) erreicht wird, wobei das Abladen des Aufbaus (2) von dem Fahrzeug (1) die Schritte umfasst:
- Ausführen einer geführten Relativbewegung zwischen dem Fahrzeug (1) und dem Aufbau (2) in Längsrichtung des Fahrzeugs (2), wodurch der Aufbau (2) von einer auf das Fahrzeug (1) aufgeladenen Transportstellung relativ zu dem Fahrzeug (1) in eine bezüglich der Fahrtrichtung des Fahrzeugs (1) rückwärtige Hubstellung überführt wird, in welcher der Aufbau (2) heckseitig über das Fahrzeug (1) vorsteht, wobei der Aufbau (2) während der geführten Relativbewegung zumindest teilweise durch das Fahrzeug (1) abgestützt wird;
- Absenken des Aufbaus (2) in vertikaler Richtung von der Hubstellung in eine von dem Fahrzeug (1) abgeladene Verladestellung, wobei das Absenken des Aufbaus (2) unter Verwendung von wenigstens einer an einem Heckbereich des Fahrzeugs (1) oder an einem bezüglich der Fahrtrichtung des Fahrzeugs (1) vorwärtigen Endbereich des Aufbaus (2) anordbaren ersten Hubeinrichtung (7) und wenigstens einer an einem bezüglich der Fahrtrichtung des Fahrzeugs (1) rückwärtigen Bereich des Aufbaus (2) anordbaren zweiten Hubeinrichtung (8) erfolgt.
